(19) Europäisches Patentamt
European Patent Office
Office européen des brevets

(11) Publication number: **0 034 053**
**B1**

(12) **EUROPEAN PATENT SPECIFICATION**

(45) Date of publication of patent specification: **30.05.84**

(51) Int. Cl.[3]: **C 03 C 3/16,** C 03 C 13/00, G 02 B 1/00

(21) Application number: **81300502.2**

(22) Date of filing: **06.02.81**

(54) **Method of producing phosphate glass and optical bodies formed therefrom.**

(30) Priority: **08.02.80 JP 15041/80**

(43) Date of publication of application:
**19.08.81 Bulletin 81/33**

(45) Publication of the grant of the patent:
**30.05.84 Bulletin 84/22**

(84) Designated Contracting States:
**DE FR GB IT NL**

(56) References cited:
**US-A-4 126 665**

**CHEMICAL ABSTRACTS, vol. 93, no. 18, November 1980, page 275, abstract 172499f, COLUMBUS, OHIO (US)**
**CHEMICAL ABSTRACTS, vol. 94, no. 16, April 1981, page 308, abstract 126285f, COLUMBUS, OHIO (US)**
**CHEMICAL ABSTRACTS, vol. 91, no. 16, October 1979, page 281, abstract 127854r, COLUMBUS, OHIO (US)**

(73) Proprietor: **FUJITSU LIMITED**
**1015, Kamikodanaka Nakahara-ku**
**Kawasaki-shi Kanagawa 211 (JP)**

(72) Inventor: **Nakamura, Osamu**
**16-2, Takaoka 7-chome Okubo-cho**
**Akashi-shi Hyogo 674 (JP)**
Inventor: **Akamatsu, Takeshi**
**4-14, Tsurukabuto 1-chome Nada-ku**
**Kobe-shi Hyogo 657 (JP)**
Inventor: **Goto, Junjiro**
**3-29 Iho 3-chome**
**Takasago-shi Hyogo 676 (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Phosphate glasses which are mainly composed of the oxides of three kinds of elements such as phosphorus, gallium and germanium are well known as being suitable for the production of optical fibres. Such glasses have generally superior optical characteristics and lower fusing temperatures compared with glasses which are mainly composed of silica (silicon dioxide, $SiO_2$) and moreover are acidic. For these reasons, such phosphate glasses are readily suitable for economically producing optical fibres by a spinning technique using the vessel fusing method utilising a quartz vessel.

Such phosphate glass as mentioned above is conventionally manufactured by a method wherein a fine powder of glass forming oxide, termed herein a soot, is first produced in a gas phase chemical reaction, and then this fine powder is collected in a vessel and vitrified by a heating and fusing process. In this conventional method, the gas phase chemical reaction is used because the soot produced shows excellent purity and in addition, loss of phosphorus is comparatively low. In the gas phase chemical reaction to produce the soot, a liquid halogen compound of the glass forming element, for example phosphorus, is used as the starting raw material. The compounds used ordinarily are phosphorus oxychloride ($POCl_3$), gallium trichloride ($GaCl_3$) and germanium tetrachloride ($GeCl_4$). These compounds are vaporised and then carried to a high temperature reaction tube in a flow of oxygen carrier gas. In the reaction tube chlorine is separated as chlorine gas, and the phosphorus, gallium and germanium combine with the oxygen to form the oxide powder or soot. These soots are collected in a quartz vessel and then fused by heating until vitrified.

The lower part of the vessel which is used is formed in the shape of a nozzle (which is closed until vitrification is complete). Thereafter, the temperature is lowered a little while still maintaining the vessel contents in liquid condition, and then the optical fibre is obtained by releasing the glass material through the nozzle.

Another well known method of manufacturing glass material consisting of the oxide of the three elements phosphorus, gallium and germanium makes use of the fact that gallium forms a very stable phosphate ($GaPO_4$) by reaction with phosphoric acid. In this method soot of $GaPO_4$ is obtained by the flame hydrolysis method in which $POCl_3$ and $GaCl_3$ are introduced into an oxyhydrogen flame in the vaporised condition. The $GaPO_4$ soot thus produced is then mixed with $P_2O_5$ soot and $GeO_2$ soot and the resulting mixture is heated and fused. According to this method the phosphorus exists in the forms of $GaPO_4$ and $GeP_2O_7$, and hence loss of phosphorus by vaporisation can be kept very low.

The two prior art methods described above suffer from a common disadvantage, namely, it is difficult to control the component ratios of the soots, and the soot formation rate is low. In other words, the controlling of soot formation by the gas phase chemical reaction is difficult because the reaction occurs for a very short time in a flame which has unstable thermal characteristics, and in addition the reaction rate is low because of the essential nature of gas phase reactions. As a result it is generally only possible to produce soots in quantities of several tens of grams in reactions lasting as long as an hour. Moreover, a proportion of unreacted halogen compound used as the raw material is exhausted out of the vessel, and as a result the yield is low. These advantages make it difficult economically to mass produce optical fibres by the known methods.

In US—A—4126665 there is disclosed a method of producing a phosphate glass by reacting zinc oxide, aluminium hydroxide or beryllium carbonate/hydroxide with phosphoric acid to form a crystalline monobasic phosphate which is then fused to form the desired glass. However, in accordance with this method, special procedures have to be carried out in order to ensure that the monobasic phosphate is of high purity.

According to the present invention there is provided a method of producing a phosphate glass including at least one glass forming element in addition to phosphorus by reacting an oxide or hydroxide of the glass forming additional element with phosphoric acid in a liquid phase to form a phosphorus containing mixture, removing water from the mixture, and fusing and vitrifying the product to form the desired phosphate glass, characterised in that the glass forming additional element is selected from the group consisting of gallium, germanium, silicon and mixtures thereof, and in that the oxide or hydroxide is produced by hydrolysing a halogen-containing compound of the glass forming additional element with water or aqueous solution.

Germanium or silicon, usually in combination with gallium, is preferably used as the glass forming additional element. In the case where the additional elements include germanium and silicon, it is preferred that the halogen-containing compound of germanium and the halogen-containing compound of silicon are first mixed together before being subjected to the liquid phase hydrolysis reaction. The halogens are preferably the chlorides. In cases where the compounds do not hydrolyse in water, hydrolysis may be promoted by adding an alkali such as ammonia.

The phosphoric acid which is used in accordance with the invention may be obtained for example by hydrolysing a halogen-containing compound of phosphorus to form aqueous phosphoric acid and hydrogen halide, and removing the hydrogen halide and excess water from the product mixture to yield the desired acid. The phosphorus compound used is preferably $POCl_3$.

The glass produced in accordance with the invention may be drawn out from the fused form to produce optical fibres. In this case it is preferred that the fused glass is subjected to additional drying by

treatment with a gaseous mixture comprising oxygen and chlorine or oxygen and thionyl chloride.

In the case where both gallium and a semi-conductor element are used as glass-forming additional elements, the method of the invention may be carried out by hydrolysing gallium trichloride using aqueous ammonia to form gallium hydroxide, hydrolysing a halogen-containing compound of the semiconductor element to form the hydrated oxide of the semiconductor element, said hydrolysis reactions being performed in the same reaction vessel to provide a mixture of the hydroxide and hydrated oxide, reacting the mixture with liquid phosphoric acid to form the phosphates of said elements and, after removing water, fusing the phosphate mixture and vitrifying the same by heating.

It will be appreciated that the present invention is concerned with glasses, particularly for transmission bodies, and more particularly provides an improved manufacturing method for glass for optical fibres mainly composed of phosphate or phosphates. Since the glass forming oxide is formed by a liquid phase reaction, the reaction need only be carried out under a relatively low temperature; the yield is generally relatively high and moreover a large amount of glass forming oxides can be manufactured by the reaction over a relatively short period of time.

For a better understanding of the invention and to show how the same may be carried into effect, reference will now be made by way of example to the accompanying drawings in which:

Figure 1 is a schematic sectional view of apparatus which may be used in one embodiment of the method of the invention;

Figure 2 is a schematic sectional view of apparatus which may be used for dehydration in accordance with the invention;

Figure 3 is a schematic sectional view of apparatus used for manufacturing $H_3PO_4$ which may be used in carrying out the invention;

Figure 4 is a graph showing the relationship between the mol ratio of $P_2O_5$ to $Ga_2O_3$, and the water resistive quality, of a glass produced by the method of the invention;

Figure 5 is a trilinear coordinate composition plot showing the relationship between composition and water resistive quality in examples of glass manufactured by the method of the invention; and

Figure 6 is a graph indicating the spectrum of light transmission loss for a glass manufactured by the method of the invention.

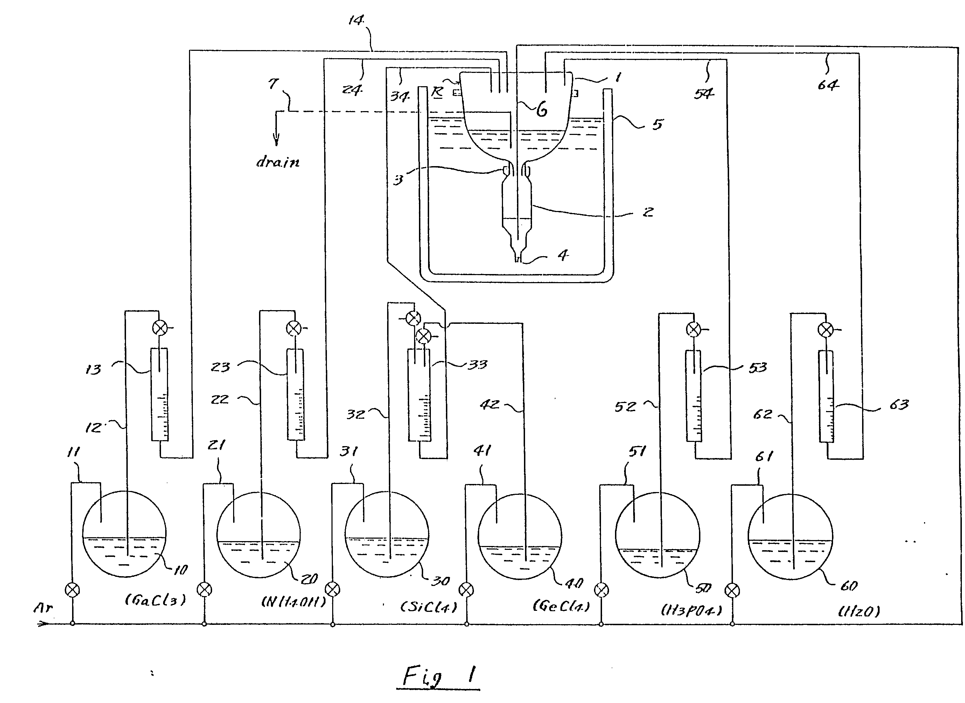

Figure 1 shows one form of apparatus which may be used in carrying out a particularly preferred embodiment of the method of the present invention, and this preferred embodiment will now be described with reference to the Figure. All the reactions of the invention explained hereinafter are carried out in a reaction vessel R housed in a thermostat unit 5. The vessel R has an upper part 1 of relatively large volume and a smaller lower part 2 which is also used as a glass fusing vessel, the two parts being coupled by a joint 3. The lower end of the lower part 2 is closed by a cover 4, whilst within the vessel an argon inlet tube 6, for stirring the contents of the vessel, extends into the lower part 2. Several other vessels (10, 20, 30, 40, 50 and 60) are shown at the lower part of Figure 1. These vessels are reservoirs for the liquids used as the raw materials of the invention or the liquids which react with said raw materials, the contents of each vessel being indicated in parentheses. (The gallium trichloride contained in vessel 10 is in the form of the aqueous solution.)

Each liquid vessel is provided with a gas pressure inlet pipe and a liquid outlet pipe, which outlet pipe is connected via a gauge to an inlet pipe for the reaction vessel 1. These pipes and gauges of Figure 1 for each respective liquid vessel are indicated by numerals which for each vessel system have a common initial digit. For example, the gas inlet pipe of the $GaCl_3$ vessel 10 is designated 11, and the liquid outlet pipe is designated 12. Pure raw material is supplied to vessels 10 to 40 from other vessels which are not shown.

A manufacturing process in accordance with the invention will now be described by way of example.

The first stage in the process is the hydrolysis of the $GaCl_3$, which is carried out with alkali since $GaCl_3$ is soluble in water and does not precipitate. To carry out this procedure a clean gas, for example, argon (Ar) is led into the raw material vessel 10 which contains $GaCl_3$ dissolved in distilled water, via the gas inlet pipe 11. The gas pressure forces the aqueous solution to the gauge 13 via the liquid outlet pipe 12, where the desired amount is weighed. This is then transferred to the reaction vessel R via the reaction vessel inlet pipe 14. Thereafter, a measured amount of ammonium hydroxide ($NH_4OH$) is delivered to the reaction vessel 1 from the vessel 20 by the same procedure via the liquid outlet pipe 22, the gauge 23 and the reaction vessel inlet pipe 24. Gallium may be thought of as almost an amphoteric element, and so becomes insoluble in the water (as the ion) and is precipitated. This precipitate is considered as the hydroxide of gallium and hereinafter it is indicated as $Ga(OH)_3$. During precipitation of the gallium hydroxide, ammonium chloride ($NH_4Cl$) is produced in the liquid phase and naturally this becomes adhered to the $Ga(OH)_3$ after the liquid is removed. For this reason, the ammonium chloride is removed by washing the $Ga(OH)_3$ precipitate with distilled water at a temperature from 70 to 80°C. The distilled water which is used is supplied from the storage vessel 60 to the reaction vessel R using the same operation as that described for delivering the aqueous solution of $GaCl_3$.

The $Ga(OH)_3$ precipitate thus obtained is in the form of a gel having comparatively large volume. After being left to stand for half an hour at an approximately constant temperature of 80°C, this volume

is reduced, whereafter the supernatant liquid is decanted and the $Ga(OH)_3$ is washed with hot water.

After this stage the $SiCl_4$ and $GeCl_4$ are immediately hydrolysed in the reaction vessel R without drying the $Ga(OH)_3$. This hydrolysis is a well known reaction wherein the chlorides of Si and Ge are reacted with water to produce respectively the oxides or hydroxides of Si and Ge. However if the $GeCl_4$ and $SiCl_4$ are individually subjected to the hydrolysis reaction, the $SiO_2$ formed by the reaction of $SiCl_4$ is not precipitated in the form of a fine powder, but rather is agglomerated in large particles which has a detrimental effect on succeeding process stages. In the present embodiment, therefore, the hydrolysis reaction is carried out by mixing the $GeCl_4$ and $SiCl_4$ before delivery to the vessel which already contains the $Ga(OH)_3$. Thus first of all a measured amount of water is delivered to the reaction vessel R. Then Ar gas pressure is applied to the $SiCl_4$ vessel 30 and the $GeCl_3$ vessel 40 by opening the cocks of the respective gas inlet pipes 31 and 41. The liquids in the vessels are forced by the gas pressure to the gauge 33, where they are mixed in specified ratio. Thereafter the mixture is forced by gas pressure to the reaction vessel R, where the $SiCl_4$ and $GeCl_4$ are simultaneously hydrolysed to form $SiO_2$, $GeO_2$ and hydrogen chloride (HCl) according to the following reactions:

$$SiCl_4 + 2H_2O = SiO_2 + 4HCl$$

$$GeCl_4 + 2H_2O = GeO_2 + 4HCl$$

After removing supernatant liquid through a drain pipe 7, the precipitates in the reaction vessel are washed with water and the HCl byproduct is removed, leaving the hydrated oxides or the hydroxides of the three elements Si, Ge, and Ga in the reaction vessel R. It has been confirmed experimentally that the hydrolysis reactions are carried out unidirectionally by the above method, the yield of the oxides or hydroxides being almost 100%. In addition, the $SiO_2$ which is produced is in fine powder form and mixed uniformly with the $GeO_2$, which is advantageous in the succeeding vitrification process stage.

In the next process stage, the oxides or hydroxides of Si, Ge and Ga are reacted with $H_3PO_4$ so as to form the desired phosphate glass including the three specified elements, this stage being carried out by adding the liquid $H_3PO_4$ to the mixture in the reaction vessel. The $H_3PO_4$ which is used must also have very high purity so that the glass produced includes very little impurity and so may be used as optical fibre for optical communication systems. The manner in which this pure $H_3PO_4$ is produced will be explained hereinafter; the production of the phosphate glass is explained immediately below.

The $H_3PO_4$ to be delivered to the reaction vessel R may include water, for example from 10 to 20%, and is stored in the raw material vessel 50. By the procedure previously described a measured amount of the phosphoric acid is moved from the reaction vessel 50 to the vessel R as required. It is difficult to confirm whether or not the phosphate producing reaction occurs at this stage. Notwithstanding this, however, the lower vessel 2 which of course contains the reactants is separated from the upper vessel 1 and is then heated in order to remove excess water. Then the vessel is heated up to 1400°C in a furnace, when the contents become fused into a transparent glass material.

Glass fibre can be obtained by drawing the glass material from the bottom of the vessel 2, but in order to give a high quality optical fibre the glass is preferably dehydrated before spinning. Thus in this embodiment, dehydration is performed by treating the glass material in the fusing condition with chloride gas ($Cl_2$) and oxygen gas ($O_2$) obtained by the oxidation of $POCl_3$.

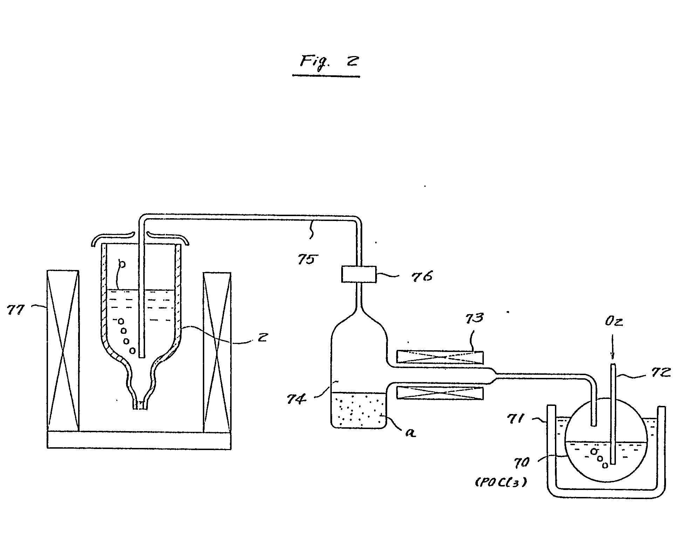

Figure 2 illustrates an example of apparatus which may be used for this dehydration process. In the Figure there is shown a vessel 70 containing $POCl_3$ which is housed in a thermostat 71. In use of the apparatus oxygen is blown into the $POCl_3$ through an inlet pipe 72 and $POCl_3$ vapour is carried with the oxygen to a heating furnace 73 which is kept at a high temperature, for example, at 800°C. A reaction indicated non-stoichiometrically by the following formula takes place in the heating furnace 73 (hereinafter referred to as the oxidation furnace) whereby chlorine gas is released from the $POCl_3$.

$$POCl_3 + O_2 \rightarrow P_2O_5 + Cl_2$$

The gas containing $P_2O_5$ and $Cl_2$ passes to a trap 74 provided outside the oxidation furnace where the $P_2O_5$ is trapped at the bottom in zone a. The remaining gaseous mixture of $Cl_2$ and $O_2$ is then passed to the vessel 2 via a pipe 75 and blown into the fusing glass material b. The pipe 75 includes a powder filter 76 which prevents any $P_2O_5$ powder entrained with the gases from mixing with the fused glass b. The glass material is fused in a high temperature furnace 77 which in the apparatus shown is kept at a temperature of 1400°C. Under these conditions, the gas supply is continued for about two hours, after which time the gas supply is stopped but the furnace is kept at 1400°C for a further hour in order to remove the bubbles and produce the refined glass b.

The technique described above offers extraordinary water removing effect, as has been shown by experimental measurements of optical transmission. Thus phosphate glass which had been subjected to the water removal technique described with reference to Figure 2 showed a light absorption loss due to the hydroxyl radical of 1 dB/km or less at a wavelength of 0.98 $\mu$m (which is the absorption band of the hydroxyl radical of water). In contrast, in phosphate glass where the water content had been

removed by passing oxygen gas therethrough, the loss measured 50 dB/km. It is concluded that a gaseous mixture of chlorine and oxygen passed through the glass gives an excellent water removing effect. It has also been found that when thionyl chloride ($SOCl_2$) is used instead of the chlorine, a similar effect can be obtained as with the oxygen and chlorine mixture.

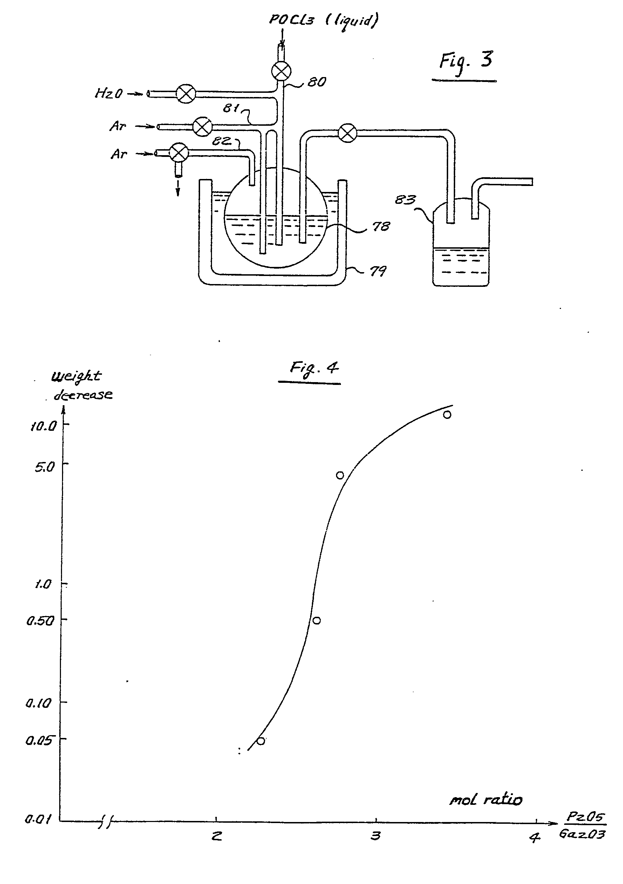

A method by which the phosphoric acid used to produce the phosphate glass may be formed is now described with reference to Figure 3 which shows apparatus for producing the $H_3PO_4$. Initially distilled water is stored in a quartz reaction vessel 78 which is housed in a thermostat 79. Then $POCl_3$ in the liquid state is gradually added to the distilled water via a pipe 80 whilst the reaction vessel is cooled. $H_3PO_4$ and HCl are produced in the vessel by the hydrolysis reaction of the following formula:

$$POCl_3 + 3H_2O = H_3PO_4 + 3HCl$$

During the reaction, an inactive gas, for example argon is passed through the liquid via a gas inlet pipe 81 in order to stir the reaction mixture. After adding the required $POCl_3$, the liquid temperature is raised whilst the argon is still being passed through, whereby the HCl and excess water produced in the hydrolysis reaction are vaporised and removed via a pipe 82 with tee-piece. At this time, since the liquid in the reaction vessel 78 contains a large amount of $H_3PO_4$, its boiling point is much higher than that of water and therefore this liquid does not boil even when the temperature exceeds 150°C. Thus, while the argon gas Ar is being introduced through the inlet pipe 81, HCl and water are vaporised by heating over a period of three hours at a temperature of about 150°C. Thereafter, the flow of argon through the pipe 81 is ceased by closing the valve, and by adjustment of the tee-piece valve in the pipe 82, argon is introduced through pipe 82 into the space above the $H_3PO_4$ in the vessel 78. The argon pressure forces the phosphoric acid into a reservoir 83 where it is stored.

Experiments have shown that by reacting a sufficient amount of distilled water with 1 kg of $POCl_3$ it is possible, using the above method, to produce 720 g of 85% aqueous phosphoric acid.

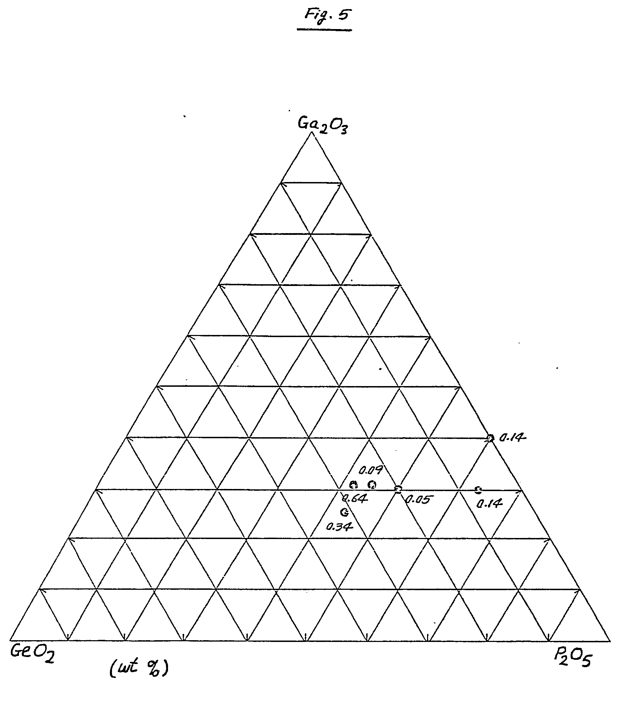

The preferred embodiments of the invention described above have been found to be highly reliable and to be capable of providing low-loss glass materials required for optical transmission purposes. Investigations into the water-resistive quality of glass material produced in accordance with the invention, which is the most important factor for determining reliability, have yielded results which have shown it to be desirable adequately to control the ratio of $P_2O_5$ and $Ga_2O_3$ in the phosphate glass. Tests results on the relationship between the ratio and the water-resistive quality of the glass produced are shown in graph form in Figure 4. In the glass used in the tests the content of $GeO_2$ was kept in the range from 10 to 25%, whilst that of $SiO_2$ was kept in the range from 0 to 10%. The horizontal axis of the graph shown in Figure 4 indicates the mol ratio of $P_2O_5/Ga_2O_3$, while the vertical axis indicates the weight decrease (%) of the glass in the water-resistive quality test. As may be seen from the graph, when the ratio is about 2.4 or less, the weight decrease is about 0.05%, which is almost equal to that of silicate glass including the dopant. The water resistive quality test method used conforms to R3JO2 of the JIS (Japanese Industrial Standard), the weight decrease of glass powder being measured after the sample of glass powder has been boiled in the water for the specified period.

Figure 5 shows the relationship between the composition and the water resistive quality of three-element phosphate glass systems manufactured by the method described above. As may be seen, when the $Ga_2O_3$ content is 20% or more, an excellent water resistive quality is obtained. The compositions of the glasses are deduced from the amounts of raw materials used in the abovementioned manufacturing methods.

As is obvious from the above explanation, the constitution of raw material of glass prepared for the abovementioned manufacturing method provides a mol ratio of $P_2O_5$ to $Ga_2O_3$ of 2.7 or more, judging from the reliability of the glass which is manufactured. A preferred raw materials content is indicated in the following table, for a glass which includes $SiO_2$ in addition to $P_2O_5$, $Ga_2O_3$ and $GeO_2$.

| Component | Range of Content (weight %) |
|---|---|
| $P_2O_5$ | 45 to 55 |
| $Ga_2O_3$ | 20 to 35 |
| $GeO_2$ | 10 to 25 |
| $SiO_2$ | 0 to 10 |

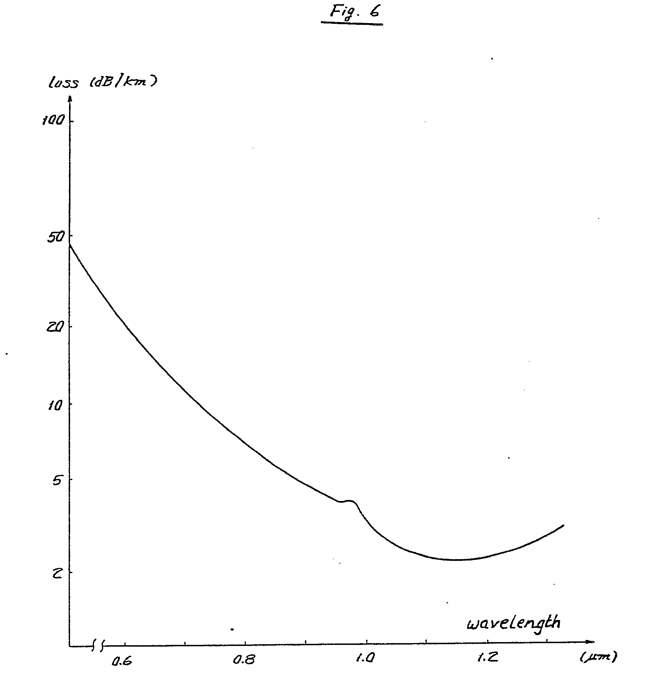

Figure 6 shows the optical transmission loss spectrum of a cladded type optical fibre formed with a phosphate glass core manufactured by the method of the present invention. The horizontal axis indicates wavelength in $\mu$m, and the vertical axis indicates loss in dB/km. As may be seen, the loss at a wavelength of 0.98 $\mu$m is 5 dB/km or less. The cladding glass which was used in the production of the

tested optical fibre is a phosphate glass including a minute amount of $B_2O_3$ (boron trioxide), in addition to $Ga_2O_3$, $Al_2O_3$ and $SiO_2$, for improving the fusing characteristics. The values of some physical characteristics and the water resistive quality of the glasses respectively forming the core and cladding of the optical fibre which was tested are indicated in the following table, in which (i) = Refractive index, (ii) = Thermal expansion coefficient, (iii) = Glass transition temperature, (iv) = Softening temperature and (v) = Water resistive quality (weight decrease rate).

| | (i) | (ii) | (iii) | (iv) | (v) |
|---|---|---|---|---|---|
| Core | 1.568 | $64 \times 10^{-7}/°C$ | 674°C | 815°C | 0.05% |
| Cladding | 1.521 | $58 \times 10^{-7}/°C$ | 715°C | 785°C | 0.06% |

The compositions of the above core and cladding glasses are shown in the following table, the content of each component being given as the oxide.

| | Component | Content (weight %) | Content (Mol %) |
|---|---|---|---|
| Core glass | $P_2O_5$ | 51.5 | 50.0 |
| | $Ga_2O_3$ | 30.0 | 22.1 |
| | $GeO_2$ | 14.9 | 19.6 |
| | $SiO_2$ | 3.6 | 8.3 |
| Cladding glass | $P_2O_5$ | 61.0 | 50.0 |
| | $Ga_2O_3$ | 12.1 | 7.5 |
| | $Al_2O_3$ | 11.0 | 12.5 |
| | $SiO_2$ | 13.1 | 25.4 |
| | $B_2O_3$ | 2.8 | 4.6 |

The $Al_2O_3$ and $B_2O_3$ which are contained in the cladding glass but not in the core glass may also be manufactured by hydrolysing the halogen compound in accordance with the invention; thus the above described manufacturing method for the core glass can also be adopted for the cladding glass.

In the case of phosphate glasses containing trivalent positive elements other than gallium, such as the cladding glass in above table, it has been found that the water resistive quality is governed by the sum of the content of $P_2O_5$ and the content of oxides of all trivalent positive elements. The composition of the cladding glass as listed above was selected as a result of experiments based on the above concept.

The above listed composition is an example of compositions which allow manufacture of optical fibres having a notably high numeric aperture (for example, a numeric aperture of 0.4) when in combination with a core glass having a composition in accordance with the above table.

Since it is desirable for the liquid form raw materials to be extremely pure, it is preferred that the purified raw materials are supplied to the respective raw material vessels without being exposed to the open air. Thus in mass production methods the purifying apparatus for the respective liquids may be directly connected to the vessels 10 to 60 of Figure 1 for storing the materials, ammonia solution and water.

As may be deduced from the specific embodiments described above, it is an advantage of the method of the present invention that the compounds used for forming the glass are all produced by reaction in the liquid phase, which means that loss of phosphorus due to vaporisation does not occur and moreover the product yield is also generally excellent. Further, since a relatively large amount of raw material can be offered for reaction as compared with methods using the gas phase chemical reaction, the glass forming compounds may generally be formed with high efficiency. Accordingly the method of the present invention is particularly well adopted to the manufacture of phosphate glass materials for the mass-production of optical elements such as optical fibres, lenses or prisms.

## Claims

1. A method of producing a phosphate glass including at least one glass forming element in addition to phosphorus by reacting an oxide or hydroxide of the glass forming additional element with phosphoric acid in a liquid phase to form a phosphorus containing mixture, removing water from the mixture, and fusing and vitrifying the product to form the desired phosphate glass, characterised in that the glass forming additional element is selected from the group consisting of gallium, germanium, silicon and mixtures thereof, and in that the oxide or hydroxide is produced by hydrolysing a halogen-containing compound of the glass forming additional element with water or aqueous solution.

2. A method according to claim 1, wherein the glass forming additional elements include germanium and silicon, and wherein the halogen containing compound of germanium and the halogen containing compound of silicon are first mixed together before being hydrolysed.

3. A method according to claim 1 or 2 wherein the phosphoric acid which is used is obtained by hydrolysing a halogen-containing compound of phosphorus to form aqueous phosphoric acid and hydrogen halide, and removing the hydrogen halide and excess water from the product mixture to yield the desired acid.

4. A method according to claim 1, 2 or 3 wherein the fused glass is subjected to additional drying by treatment with a gaseous mixture comprising oxygen and chlorine or oxygen and thionyl chloride.

5. A method according to any one of the preceding claims which includes the additional step of spinning or drawing the fused glass to form optical fibre.

6. A method according to any one of the preceding claims wherein the glass forming additional elements comprise gallium and a semiconductor element, which method comprises hydrolysing gallium trichloride using aqueous ammonia to form gallium hydroxide, hydrolysing a halogen containing compound of the semiconductor element to form the hydrated oxide of the semiconductor element, said hydrolysis reactions being performed in the same reaction vessel to provide a mixture of the hydroxide and hydrated oxide, reacting the mixture with phosphoric acid in a liquid phase to form the phosphates of said elements and, after removing water, fusing the phosphate mixture and vitrifying the same by heating.

## Revendications

1. Un procédé pour produire un verre au phosphate contenant au moins un élément formateur de verre en plus du phosphore, par réaction d'un oxyde ou hydroxyde de l'élément supplémentaire formateur de verre avec l'acide phosphorique en phase liquide pour former un mélange contenant du phosphore, élimination de l'eau du mélange et fusion et vitrification du produit pour former le verre au phosphate désiré, caractérisé en ce que l'élément supplémentaire formateur de verre est choisi parmi le gallium, le germanium, le silicium et leurs mélanges et en ce que l'oxyde ou hydroxyde est produit par hydrolyse d'un composé halogéné de l'élément supplémentaire formateur de verre par l'eau ou une solution aqueuse.

2. Un procédé selon la revendication 1, dans lequel les éléments supplémentaires formateurs de verre comprennent le germanium et le silicium et dans lequel le composé halogéné de germanium et le composé halogéné de silicium sont d'abord mélangés ensemble avant d'être hydrolysés.

3. Un procédé selon la revendication 1 ou 2 dans lequel l'acide phosphorique qui est utilisé est obtenu par hydrolyse d'un composé halogéné de phosphore pour former de l'acide phosphorique aqueux et un halogénure d'hydrogène et élimination de l'halogénure d'hydrogène et de l'excès d'eau du mélange produit pour donner l'acide désiré.

4. Un procédé selon la revendication 1, 2 ou 3, dans lequel le verre fondu est soumis à un séchage supplémentaire par traitement par un mélange gazeux comprenant de l'oxygène et du chlore ou de l'oxygène et du chlorure de thionyle.

5. Un procédé selon l'une quelconque des revendications précédentes qui comprend l'étape supplémentaire de filage ou étirage du verre fondu pour former une fibre optique.

6. Un procédé selon l'une quelconque des revendications précédentes dans lequel les éléments supplémentaires formateurs de verre comprennent le gallium et un élément semi-conducteur, procédé qui consiste à hydrolyser le trichlorure de gallium en utilisant de l'ammoniaque aqueuse pour former de l'hydroxyde de gallium, à hydrolyser un composé halogéné de l'élément semi-conducteur pour former l'oxyde hydraté de l'élément semi-conducteur, lesdites réactions d'hydrolyse étant effectuées dans le même récipient de réaction pour donner un mélange de l'hydroxyde et de l'oxyde hydraté, à faire réagir le mélange avec l'acide phosphorique en phase liquide pour former les phosphates desdits éléments et, après élimination de l'eau, à fondre le mélange de phosphates et à vitrifier celui-ci par chauffage.

## Patentansprüche

1. Verfahren zur Erzeugung von Phosphatglas, bei welchem zusätzlich zu Phosphor wenigstens ein Glas bildendes Element durch Reaktion eines Oxids oder eines Hydroxids des Glas bildenden

Elements mit Phosphorsäure in einer flüssigen Phase zur Reaktion gebracht wird, um eine Phosphor enthaltende Mischung zu bilden, bei welchem Wasser aus der Mischung entfernt wird und das Produkt geschmolzen und vitrifiziert wird, um das gewünschte Phosphatglas zu bilden, dadurch gekennzeichnet, daß das zusätzliche Glas bildende Element ausgewählt ist aus der Gruppe bestehend aus Gallium, Germanium, Silizium und Mischungen von diesen, und daß das Oxid oder Hydroxid durch Hydrolyse einer halogenhaltigen Verbindung des zusätzlichen Glas bildenden Elements mit Wasser oder wäßriger Lösung erzeugt wird.

2. Verfahren nach Anspruch 1, bei welchem die Glas bildenden zusätzlichen Elemente Germanium und Silizium umfassen und bei welchem die Halogen enthaltende Verbindung von Germanium und die Halogen enthaltende Verbindung von Silizium zunächst miteinander vermischt werden, bevor sie hydrolysiert werden.

3. Verfahren nach Anspruch 1 oder 2, bei welchem die verwendete Phosphorsäure durch Hydrolyse einer Halogen enthaltenden Verbindung von Phosphor erhalten wird, um wäßrige Phosphorsäure und Halogenwasserstoff zu bilden, und bei welchem der Halogenwasserstoff und überschüssiges Wasser von der erzeugten Mischung entfernt werden, um die gewünsche Säure zu erhalten.

4. Verfahren nach Anspruch 1, 2 oder 3, bei welchem das geschmolzene Glas einer zusätzlichen Trocknung durch Behandlung mit einer gasförmigen Mischung unterworfen wird, welche Sauerstoff und Chlor oder Saurestoff und Thionylchlorid enthält.

5. Verfahren nach einem der vorhergehenden Ansprüche, welches den zusätzlichen Schritt des Spinnens oder Ziehens des geschmolzenen Glases zur Formung einer optischen Faser enthält.

6. Verfahren nach einem der vorhergehenden Ansprüche, bei welchem die Glas bildenden zusätzlichen Element Gallium und ein Halbleiterelement umfassen, welches die Hydrolysierung von Galliumtrichlorid unter Verwendung wäßrigen Ammoniaks zur Bildung von Galliumhydroxid, die Hydrolysierung einer Halogen enthaltenden Verbindung des Halbleiterelements zur Bildung des hydrierten Oxids des Halbleiterelements umfaßt, wobei die genannten Hydrolysereaktionen in demselben Reaktionsbehälter durchgeführt werden, um eine Mischung des Hydroxids und des hydrierten Oxids zu liefern, bei welchem die Mischung mit Phosphorsäure in einer flüssigen Phase zur Reaktion gebracht wird, um die Phosphate der genannten Elemente zu bilden, und, nach Entfernung des Wassers, die Phosphatmischung durch Erhitzen geschmolzen und vitrifiziert wird.

drain
Ar
$(GaCl_3)$
$(NH_4OH)$
$(SiCl_4)$
$(GeCl_4)$
$(H_3PO_4)$
$(H_2O)$

Fig 1

72
O2
71
70
(POCl3)
73
76
a
75
74
2
77

Fig. 2

POCl3 (liquid)
Fig. 3
H2O
Ar
Ar
80
81
82
83
78
79

Fig. 4
weight decrease
10.0
5.0
1.0
0.50
0.10
0.05
0.01
mol ratio
P2O5 / Ga2O3
2
3
4

Fig. 5

$Ga_2O_3$
$GeO_2$
$P_2O_5$
(wt %)
0.14
0.09
0.64
0.05
0.14
0.34

Fig. 6

loss (dB/km)
100
50
20
10
5
2
wavelength
0.6
0.8
1.0
1.2
(μm)